# EUROPÄISCHE PATENTSCHRIFT

(11) **EP 3 144 521 B1**
(45) Veröffentlichungstag und Bekanntmachung des Hinweises auf die Patenterteilung: **02.07.2025**
(21) Anmeldenummer: 16001976.6
(22) Anmeldetag: 10.09.2016
(51) Int. Cl.: F02P 5/145

(54) **VERFAHREN ZUM BETRIEB EINES ARBEITSGERÄTES MIT EINEM VERBRENNUNGSMOTOR**
METHOD FOR OPERATING A WORK DEVICE WITH A COMBUSTION ENGINE
PROCEDE DE FONCTIONNEMENT D'UN APPAREIL DE TRAVAIL COMPRENANT UN MOTEUR A COMBUSTION

(30) Priorität: 15.09.2015 DE 102015012042
(43) Veröffentlichungstag der Anmeldung: 22.03.2017
(73) Patentinhaber: Andreas Stihl AG & Co. KG, 71336 Waiblingen (DE)
(72) Erfinder: Banzhaf, Jan-Philipp, 71409 Schwaikheim (DE); Schmidt, Karsten, 71332 Waiblingen (DE)
(74) Vertreter: Wasmuth, Rolf

(56) Entgegenhaltungen:
- EP-A1- 2 891 785
- EP-A2- 2 270 325
- EP-A2- 2 623 752
- EP-B1- 2 270 325
- EP-B1- 2 891 785
- DE-A1- 102006 038 277
- DE-A1- 3 326 278
- DE-A1- 4 326 010
- DE-C2- 3 326 278
- US-A1- 2014 165 964

## Beschreibung

Die Erfindung betrifft ein Verfahren zum Betrieb eines Arbeitsgerätes mit einem Verbrennungsmotor nach dem Oberbegriff des Anspruchs 1.

Bekannte Arbeitsgeräte wie Motorkettensägen, Freischneider, Trennschleifer, Blasgeräte oder dergleichen können mit einem Verbrennungsmotor angetrieben sein, der oft als Zweitaktmotor oder Viertaktmotor ausgebildet ist. Zum Betrieb des Verbrennungsmotors ist eine Zündvorrichtung zum Auslösen eines Zündfunkens an einer Zündkerze vorgesehen, wobei der Zündfunke ein Kraftstoff/Luft-Gemisch im Brennraum des Verbrennungsmotors entzündet. Der den Brennraum begrenzende Kolben wird von dem Verbrennungsdruck nach unten beschleunigt und treibt eine Kurbelwelle drehend an, wobei der Kolben einen Hub zwischen einem oberen Totpunkt und einem unteren Totpunkt durchfährt.

Die Zündvorrichtung löst abhängig von der Drehlage der Kurbelwelle in einem Zündzeitpunkt den Zündfunken an der Zündkerze aus, um abhängig vom Betriebsfall den Motorlauf sicherzustellen.

Die rotierende Kurbelwelle des Verbrennungsmotors treibt über eine Kupplung ein Werkzeug an, wobei die Kupplung zweckmäßig als Fliehkraftkupplung ausgebildet ist.

Tritt im Betrieb des Arbeitsgerätes, zum Beispiel bei einer Motorkettensäge, einem Trennschleifer oder dgl. ein Blockieren des Werkzeuges auf, so saugt die Maschine weiterhin Kraftstoffmengen wie unter Volllast an, da der Benutzer weiterhin Vollgas gibt. Dies führt bei niedriger werdender Drehzahl zu einem fetten Gemisch. Lässt der Benutzer den Gashebel plötzlich los, kann dies zum Ausgehen des Verbrennungsmotors führen.

Eine ähnliche Situation tritt auf, wenn der Benutzer den Verbrennungsmotor des Arbeitsgerätes trotz einer eingelegten Sicherheitsbremse in Betrieb nimmt. Bemerkt er dies und lässt den Gashebel plötzlich los, geht die Maschine häufig fett aus.

Das unter Volllast dem Verbrennungsmotor zugeführte Kraftstoff/Luft-Gemisch wird unter Berücksichtigung der Volllastdrehzahl zu einem vorgegebenen Zündzeitpunkt vor OT gezündet und verbrennt derart, dass ein ausreichender Druckaufbau zum Antrieb des Kolbens gegeben ist. Bei einem späten Zündzeitpunkt hat ein gezündetes unter Volllast angesaugtes fettes Kraftstoff/Luft-Gemisch aber keine ausreichende Zeit zur vollständigen Verbrennung bzw. zur Ausbildung der Flammfront und einen damit einhergehenden Druckaufbau, der zum Antrieb des Kolbens notwendig ist. Das kann dazu führen, dass der Verbrennungsmotor "fett" ausgeht.

Aus der EP 2 270 325 A2 ist ein Verfahren zur Einstellung eines Betriebspunktes für einen Verbrennungsmotor bekannt. Zunächst wird die aktuelle Lage des Betriebspunktes auf der Leistungskurve ermittelt, indem der Zündzeitpunkt verstellt und die Drehzahlreaktion des Verbrennungsmotors ausgewertet wird. Durch Anpassung der Kraftstoffzufuhr kann dann ein gewünschter Betriebspunkt eingestellt werden.

In der EP 2 623 752 A2 ist ein handgeführtes Arbeitsgerät mit einem Verbrennungsmotor beschrieben, dessen Arbeitsdrehzahl einstellbar ist. Dadurch wird ein Betrieb des Arbeitsgerätes trotz Vollgasstellung bei verminderter Drehzahl möglich.

US 2014/165 964 A1 beschreibt ein weiteres Verfahren zum Betrieb eines Verbrennungsmotors in einem handgeführten Arbeitsgerät, in dem der Zündzeitpunkt in Abhängigkeit der Drehzahl verstellt wird.

Der Erfindung liegt die Aufgabe zugrunde, ein Verfahren zum Betrieb eines Arbeitsgerätes mit einem Verbrennungsmotor anzugeben, bei welchem ein fettes Ausgehen des Verbrennungsmotors auch unter ungünstigen Betriebsbedingungen vermieden ist.

Die Aufgabe wird erfindungsgemäß nach den Merkmalen des Anspruchs 1 gelöst.

Die Drehzahl des Verbrennungsmotors wird überwacht, vorteilhaft permanent überwacht. Auf diese Weise kann festgestellt werden, ob die Drehzahl des Verbrennungsmotors innerhalb einer vorgegebenen Zeitdauer in einem vorgegebenen Drehzahlbereich liegt.

Wird - zum Beispiel über eine Drehzahlüberwachungsschaltung - festgestellt, dass die Drehzahl für eine vorgegebene Zeitdauer in einem vorgegebenen Drehzahlbereich liegt und fällt dann die Drehzahl des Verbrennungsmotors unter einen Drehzahlgrenzwert ab, wird der von der Zündvorrichtung eingestellte Zündzeitpunkt nach früh verstellt.

Durch die signifikante Verstellung des Zündzeitpunktes in Richtung früh ist vermieden, dass das fette Kraftstoff/Luft-Gemisch zum Zeitpunkt der Zündung bereits stark verdichtet und nur schwer zündfähig ist. Die Verstellung der Zündung in Richtung "früh" stellt sicher, dass der Zündfunke in einem Zeitpunkt erfolgt, in dem das fette Kraftstoff/Luft-Gemisch noch zündfähig ist, also eine Verbrennung initiiert wird und sich die Flammfront ausbreiten kann. Dadurch wird erreicht, dass z. B. bei einem blockierten Werkzeug und einem Absinken der Drehzahl bis in den vorgegebenen Drehzahlbereich ein abruptes Loslassen des Gashebels - und ein damit verbundener plötzlicher Abfall der Drehzahl des Verbrennungsmotors unter einen Drehzahlgrenzwert - nicht zu einem fetten Ausgehen des Verbrennungsmotors führt.

Die Bedingungen der Lage der Drehzahl in einem vorgegebenen Drehzahlbereich und eines darauffolgenden signifikanten Drehzahlabfalls unter einen Drehzahlgrenzwert können in einfacher Weise miteinander verknüpft werden, indem mit der Erfüllung der ersten Bedingung ein Statusindikator gesetzt wird und der Zündzeitpunkt dann auf früh verstellt wird, wenn bei gesetztem Statusindikator der Abfall der Drehzahl unter den Drehzahlgrenzwert festgestellt wird.

Ein einmal gesetzter Statusindikator wird solange gehalten, bis die Drehzahl unter den Drehzahlgrenzwert abfällt und die Zündung nach früh verstellt wird. Ein gesetzter Statusindikator kann auch solange gehalten werden, bis die Drehzahl wieder ansteigt und oberhalb des vorgegebenen Drehzahlbereichs liegt bzw. die obere Grenze des Drehzahlbereichs übersteigt.

Es kann zweckmäßig sein, den Statusindikator für eine vorgegebene Zeitdauer zu halten. Als Zeitdauer kann eine Zeitspanne von 2 bis 3 Sekunden vorteilhaft sein.

Die vorgegebene Zeitdauer, innerhalb der die Drehzahl in einem vorgegebenen Drehzahlbereich liegen soll und/oder die Zeitdauer, für die ein gesetzter Statusindikator gehalten wird, kann vorteilhaft durch eine vorgegebene Anzahl von Kurbelwellenumdrehungen bestimmt sein. In einfacher Weise ist die Zeitdauer durch fünf bis fünfzig aufeinanderfolgende Kurbelwellenumdrehungen bestimmt; insbesondere ist die Zeitdauer durch zehn Kurbelwellenumdrehungen gegeben. Die Bestimmung der Zeitdauer durch Kurbelwellenumdrehungen hat den Vorteil, dass die Zeit an die aktuelle Drehzahl des Verbrennungsmotors angepasst ist, ohne dass hierzu besondere Maßnahmen erforderlich sind.

Zweckmäßig schließen die Kurbelwellenumdrehungen, die die Zeitdauer bestimmen, unmittelbar aneinander an.

Der Drehzahlgrenzwert, der nach Vorliegen der ersten Bedingung zu unterschreiten ist, liegt unterhalb des vorgegebenen Drehzahlbereichs. Der Drehzahlgrenzwert ist kleiner als die untere Drehzahlgrenze des Drehzahlbereichs.

Zweckmäßig ist die Kupplung, die zwischen der Kurbelwelle und dem Werkzeug vorgesehen ist, eine Fliehkraftkupplung. Die Einkuppeldrehzahl dieser Fliehkraftkupplung liegt unterhalb des vorgesehenen Drehzahlbereichs.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in perspektivischer Darstellung ein Arbeitsgerät mit einem Verbrennungsmotor am Beispiel einer Motorkettensäge,
- Fig. 2: in perspektivischer Darstellung ein Arbeitsgerät mit einem Verbrennungsmotor am Beispiel eines Trennschleifers,
- Fig. 3: in schematischer Darstellung eine Vorrichtung zur Steuerung des Zündzeitpunktes für die Zündung des Verbrennungsmotors,
- Fig. 4: ein Ablaufdiagramm zum Betrieb des Arbeitsgerätes,
- Fig. 5: eine Zündzeitpunktkurve in einer Ausbildung als Gabelkurve.

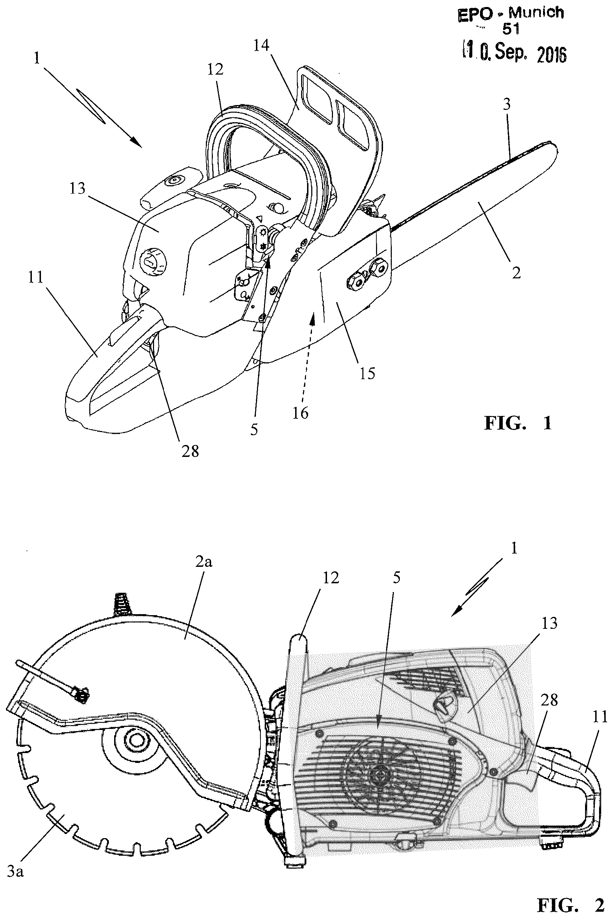

In Fig. 1 ist als Beispiel eines Arbeitsgerätes 1 mit einem Verbrennungsmotor eine Motorkettensäge gezeigt, deren auf einer Führungsschiene 2 umlaufende Sägekette 3 von dem Verbrennungsmotor 5 angetrieben ist. Das Arbeitsgerät weist einen hinteren Handgriff 11 auf, der sich im Wesentlichen in Längsrichtung des Arbeitsgerätes 1 erstreckt. Im hinteren Handgriff 11 ist ein Gashebel 28 zur Steuerung des Verbrennungsmotors 5 vorgesehen.

Ein vorderer Handgriff 12 ist als Bügelgriff ausgebildet und übergreift das Gehäuse 13 des Arbeitsgerätes 1 von der einen Längsseite zu dessen anderer Längsseite. Vor dem vorderen Handgriff 12 ist ein Handschutz 14 vorgesehen, der als Auslöser für eine unter einem Kettenraddeckel 15 liegende Sicherheitsbremse 16 vorgesehen ist.

In Fig. 2 ist als weiteres Beispiel eines Arbeitsgerätes 1 mit einem Verbrennungsmotor ein Trennschleifer gezeigt, dessen Trennscheibe 3a von dem Verbrennungsmotor 5 angetrieben ist. Der Trennscheibe 3a ist eine Haube 2a zugeordnet, die die Trennscheibe 3a zum Schutz übergreift und sich über einen Umfangswinkel von 180° erstreckt. Das als Trennschleifer ausgebildete Arbeitsgerät 1 weist einen hinteren Handgriff 11 auf, der sich im Wesentlichen in Längsrichtung des Arbeitsgerätes 1 erstreckt. Im hinteren Handgriff 11 ist ein Gashebel 28 zur Steuerung des Verbrennungsmotors 5 vorgesehen. Ein vorderer Handgriff 12 ist als Bügelgriff ausgebildet und übergreift das Gehäuse 13 des Arbeitsgerätes 1 von der einen Längsseite zu dessen anderer Längsseite.

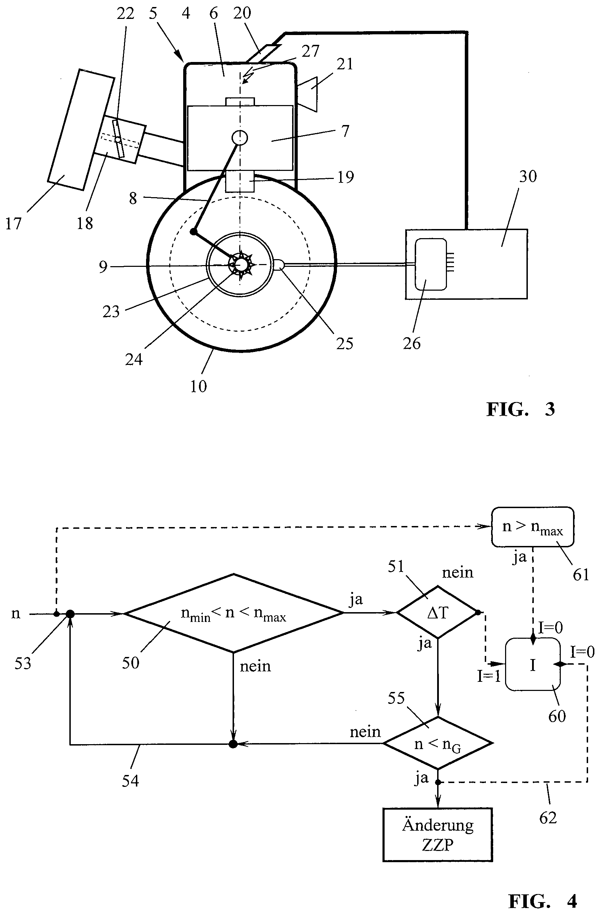

Der im Gehäuse des Arbeitsgerätes 1 angeordnete Verbrennungsmotor 5 ist in einer schematischen Darstellung in Fig. 3 wiedergegeben und umfasst einen Zylinder 4 mit einem Brennraum 6, der von einem Kolben 7 begrenzt ist. Der Kolben 7 treibt über ein Pleuel 8 eine Kurbelwelle 9 an, die in einem Kurbelgehäuse 10 gelagert ist.

Der Verbrennungsmotor 5 saugt über einen Luftfilter 17 und eine beispielhaft dargestellte Gemischbildungseinrichtung, im Ausführungsbeispiel einen Vergaser 18, zündfähiges Kraftstoff/Luft-Gemisch in das Kurbelgehäuse 10. Die Gemischbildungseinrichtung kann auch ein elektronisch gesteuerter Vergaser sein oder eine Kraftstoffeinspritzpumpe umfassen. Das in der Gemischbildungseinrichtung gebildete, zündfähige Kraftstoff/LuftGemisch wird bei einer Abwärtsbewegung des Kolbens 7 über zumindest einen Überströmkanal 19 vom Kurbelgehäuse 10 in den Brennraum 6 gefördert. Bei einer folgenden Aufwärtsbewegung des Kolbens 7 wird das Gemisch im Brennraum 6 verdichtet und von einer Zündkerze 20 gezündet. Der sich bei der Verbrennung aufbauende Verbrennungsdruck treibt den Kolben 7 wieder abwärts, wobei die Verbrennungsgase über einen Auslass 21 abgeführt werden.

Die Gemischbildungseinrichtung, im Ausführungsbeispiel der Vergaser 18, weist eine Drosselklappe 22 auf, deren Drehstellung über den Gashebel 28 (Fig. 1, 2) im hinteren Handgriff 11 des Arbeitsgerätes 1 zu steuern ist.

Die Zündkerze 20 wird von einer Zündvorrichtung 30 angesteuert, welche in Abhängigkeit von der Drehlage der Kurbelwelle 9 in einem Zündzeitpunkt ZZP einen Zündfunken 27 an der Zündkerze 20 auslöst.

Die rotierende Kurbelwelle 9 treibt über eine Kupplung 23 das Werkzeug an, im gezeigten Ausführungsbeispiel die Sägekette 3 der Motorkettensäge nach Fig. 1. Hierzu treibt die Kupplung 23 ein Kettenrad 24 an, über welches die Sägekette 3 angetrieben ist.

Läuft der Verbrennungsmotor unter Volllast, wozu die Drosselklappe 22 vollständig geöffnet ist (strichlierte Lage), wird ein fettes Kraftstoff/Luft-Gemisch dem Brennraum 6 zugeführt. Wird nun z. B. der als Auslöser wirkende Handschutz 14 der Sicherheitsbremse 16 ausgelöst, wird die Abtriebsseite der als Fliehkraftkupplung ausgebildeten Kupplung 23 gebremst. Die Drehzahl des Verbrennungsmotors fällt ab; der Verbrennungsmotor arbeitet gegen die angelegte Sicherheitsbremse 16.

Eine vergleichbare Situation ergibt sich, wenn das vom Verbrennungsmotor über die Fliehkraftkupplung angetriebene Werkzeug blockiert. Z. B. kann sich die Sägekette 3 oder die Trennscheibe 3a im Schnitt verklemmen.

Nach der Erfindung ist vorgesehen, dass die Drehzahl n des Verbrennungsmotors 5 überwacht wird, insbesondere permanent überwacht wird. Hierzu ist an der Kurbelwelle ein Drehzahlsensor 25 angeordnet, dessen Ausgangssignal einer Drehzahlüberwachungsschaltung 26 zugeführt ist. Die Drehzahlüberwachungsschaltung 26 ist vorzugsweise in die Zündvorrichtung 30 zur Einstellung des Zündzeitpunktes ZZP integriert; die Drehzahlüberwachungsschaltung 26 ist mit der Zündvorrichtung 30 elektrisch verbunden.

Während des Betriebs des Verbrennungsmotors 5 meldet der Drehzahlsensor 25 die aktuelle Drehzahl n der Drehzahlüberwachungsschaltung 26. Diese verarbeitet das Signal entsprechend dem Ablaufdiagramm in Fig. 4. Zunächst wird in einem ersten Element 50 überwacht, ob die Drehzahl n innerhalb eines Drehzahlbereichs liegt, der durch die minimale Drehzahl nₘᵢₙ und die maximale Drehzahl nₘₐₓ bestimmt ist. Außerhalb dieses Drehzahlbereichs nₘᵢₙ < n < nₘₐₓ liegt die Einkuppeldrehzahl n_{Kuppel} der als Fliehkraftkupplung ausgebildeten Kupplung 23. Die Einkuppeldrehzahl n_{Kuppel} kann z. B. bei etwa 3.500 Umdrehungen/Minute liegen. Vorteilhaft kann die minimale Drehzahl nₘᵢₙ bei etwa 3.700 Umdrehungen und die maximale Drehzahl nₘₐₓ bei etwa 5.000 Umdrehungen liegen. Der durch die minimale Drehzahl nₘᵢₙ und die maximale Drehzahl nₘₐₓ bestimmte Drehzahlbereich kann auch als Drehzahlfenster bezeichnet werden.

Stellt die Drehzahlüberwachungsschaltung 26 fest, dass die aktuelle Drehzahl n für eine Zeitdauer ΔT innerhalb des Drehzahlbereichs nₘᵢₙ < n < nₘₐₓ liegt, ist eine erste Bedingung erfüllt. Bei Erfüllung der ersten Bedingung wird in der Drehzahlüberwachungsschaltung 26 vorteilhaft ein Statusindikator I gesetzt. Ein derartiger Statusindikator wird in der Informatik auch als "Flag" bezeichnet.

Zweckmäßig wird über ein Zeitglied 51 überwacht, ob die erste Bedingung über einen Zeitraum ΔT anliegt. Ist dies der Fall und fällt danach die Drehzahl unter einen Drehzahlgrenzwert n_{G} ab, wirkt die Drehzahlüberwachungsschaltung 26 derart auf die Zündvorrichtung 30 ein, dass der aktuelle Zündzeitpunkt ZZP nach "früh" verstellt wird. Dadurch wird erreicht, dass der Verbrennungsmotor 5 auch beim Loslassen des Gashebels 28 nicht fett ausgeht. Der Drehzahlgrenzwert n_{G} liegt unterhalb der minimalen Drehzahl nₘᵢₙ des vorgegebenen Drehzahlbereichs nₘᵢₙ; nₘₐₓ.

Fällt trotz des Verweilens der aktuellen Drehzahl n im Drehzahlbereich nₘᵢₙ < n < nₘₐₓ die Drehzahl auch nach Ablauf der Zeit ΔT im Zeitglied 51 nicht unter den Drehzahlgrenzwert n_{G}, wird über den Zweig 54 zum Knotenpunkt 53 zurückverzweigt und weiterhin die Drehzahl n überwacht. Eine Frühverstellung des Zündzeitpunktes ZZP erfolgt nicht.

Fällt nach Vorliegen der ersten Bedingung die Drehzahl entsprechend der Abfrage 55 unter den Drehzahlgrenzwert n_{G} ab, wird der Zündzeitpunkt ZZP nach früh verstellt.

Zur Speicherung des Zustandes, dass die erste Bedingung erfüllt war, kann ein Statusindikator I gesetzt werden, wie mit dem Feld 60 wiedergegeben ist. Ist der Statusindikator I gesetzt, und fällt die Drehzahl n unter den Drehzahlgrenzwert n_{G} ab, wird der Zündzeitpunkt ZZP nach früh verstellt.

Ist ein Statusindikator I gesetzt, wird dieser dann gelöscht, wenn die Drehzahl n oberhalb des vorgegebenen Drehzahlbereichs liegt. Die Löschung erfolgt, wenn die Drehzahl n über die maximale Drehzahl nₘₐₓ des Drehzahlbereichs ansteigt. Dies wird im Feld 61 abgefragt, wobei bei Eintritt des Ereignisses der Statusindikator I gelöscht wird.

Der Statusindikator kann auch dann gelöscht werden, wenn - wie im Feld 55 abgefragt - die aktuelle Drehzahl n unter den Drehzahlgrenzwert n_{G} fällt. Dies erfolgt über den Zweig 62.

Es kann vorgesehen sein, dass der gesetzte Statusindikator I für eine vorgegebene Zeitdauer t gehalten wird. Diese Zeitdauer t und die Zeitdauer ΔT im Feld 51 kann eine vorgegebene Zeitspanne von z. B. 2 bis 3 Sekunden sein. Vorteilhaft ist die Zeitdauer t und/oder die Zeitdauer ΔT durch eine vorgegebene Anzahl von aufeinanderfolgenden Kurbelwellenumdrehungen bestimmt, wobei zweckmäßig fünf bis fünfzig Kurbelwellenumdrehungen vorgesehen sind. Insbesondere werden zehn aufeinander folgende Kurbelwellenumdrehungen zur Bestimmung der Zeitdauer festgesetzt, wobei die Kurbelwellenumdrehungen zweckmäßig unmittelbar aneinander anschließen.

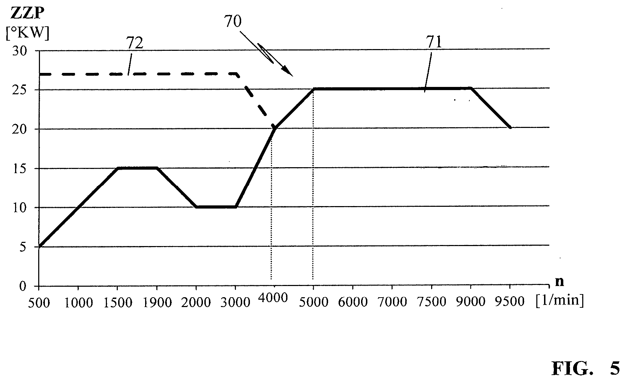

In Fig. 5 ist eine Zündzeitpunktkurve 70 über der Drehzahl n wiedergegeben, die auch als Gabelkurve bezeichnet werden kann. Der eine Kurvenast 71 gibt als durchgezogene Linie die für den Normalbetrieb des Verbrennungsmotors 5 wirksame Verstellkurve des Zündzeitpunktes ZZP wieder, der auf der Y-Achse des Diagramms angegeben ist. Der strichliert gezeichnete Kurvenast 72 gibt den Verlauf der Verstellkurve des Zündzeitpunktes ZZP wieder, wenn die Bedingungen zur Umschaltung des Zündzeitpunktes ZZP nach "früh" erfüllt sind. Hierzu muss für einen vorgegebenen Zeitraum ΔT die Drehzahl n innerhalb des Drehzahlbereichs nₘᵢₙ; nₘₐₓ liegen, also größer als die minimale Drehzahl nₘᵢₙ und kleiner als die maximale Drehzahl nₘₐₓ sein. Nach Erfüllung dieser ersten Bedingung muss die Drehzahl unter einen Drehzahlgrenzwert n_{G} abfallen, der unterhalb des vorgegebenen Drehzahlbereichs nₘᵢₙ < n < nₘₐₓ liegt. Ist auch diese Bedingung erfüllt, wirkt die Drehzahlüberwachungsschaltung 26 derart auf die Zündvorrichtung 30 ein, dass anstelle des Kurvenastes 71 der Kurvenast 72 durchfahren wird, also der Zündzeitpunkt in Richtung "früh" verstellt wird. Der frühe Zündzeitpunkt ZZP liegt in einem Bereich zwischen 20° KW und 27° KW und stellt sicher, dass der Verbrennungsmotor 5 nicht fett ausgeht. Wie Fig. 5 auch zeigt, liegt der ZZP der Frühverstellung im Drehzahlbereich unter 3.000 1/min früher als der ZZP bei Drehzahlen oberhalb von 5.000 1/min. Während auf dem Kurvenast 71 im Normalbetrieb in einem Drehzahlbereich oberhalb 5.000 Umdrehungen eine Verstellung des ZZP bis auf 25° vor OT erfolgt, wird nach der erfindungsgemäßen Frühverstellung bei Drehzahlen unterhalb von 3.000 Umdrehungen der ZZP bis auf 27° KW vor OT eingestellt.

Wird der Verbrennungsmotor 5 abgeschaltet, wird auch die Drehzahlüberwachungsschaltung 26 und die Zündvorrichtung 30 auf Dauer stromlos. Die Zustände der Abfragen nach Fig. 4 gehen verloren. Mit der erneuten Inbetriebnahme des Verbrennungsmotors 5 wird das System resettet, d. h. das System nimmt einen vorgegebenen Ausgangszustand ein. Aus diesem Ausgangszustand werden das System und die Abfragen gemäß Fig. 4 neu gestartet.

## Patentansprüche

1. Verfahren zum Betrieb eines Arbeitsgerätes mit einem Verbrennungsmotor,
- wobei eine Zündvorrichtung (30) zum Auslösen eines Zündfunkens (27) an einer Zündkerze (20) vorgesehen ist
- und der Zündfunken zur Zündung eines Kraftstoff/Luft-Gemisches in einem Brennraum (6) des Verbrennungsmotors (5) vorgesehen ist
- wobei der Brennraum (6) von einem Kolben (7) begrenzt ist,
- und die Zündvorrichtung (30) abhängig von der Drehlage der Kurbelwelle (9) in einem Zündzeitpunkt (ZZP) den Zündfunken (27) an der Zündkerze (20) auslöst,
- und die Kurbelwelle (9) des Verbrennungsmotors (1) ein Werkzeug antreibt,
- wobei zwischen der Kurbelwelle (9) und dem Werkzeug eine Kupplung (23) angeordnet ist,
- und die Drehzahl (n) des Verbrennungsmotors (5) über eine Drehzahlüberwachungsschaltung (26) überwacht wird,
**dadurch gekennzeichnet,**
- **dass** der Zündzeitpunkt (ZZP) der Zündvorrichtung (30) dann nach früh verstellt wird, wenn nacheinander folgende Bedingungen erfüllt sind:
i. die Drehzahl (n) liegt innerhalb einer vorgegebenen Zeitdauer (ΔT) in einem Drehzahlbereich (nₘᵢₙ; nₘₐₓ) von 3.000 1/min bis 5.000 1/min, wobei die vorgegebene Zeitdauer (ΔT) 2 bis 3 Sekunden ist oder durch eine vorgegebene Anzahl von aufeinanderfolgenden Kurbelwellenumdrehungen bestimmt ist, wobei fünf bis fünfzig Kurbelwellenumdrehungen vorgesehen sind,
ii. die Drehzahl (n) des Verbrennungsmotors (5) fällt nach Erfüllung der ersten Bedingung unter einen Drehzahlgrenzwert (n_{G}) ab, der unterhalb der Drehzahl (nₘᵢₙ₎ von 3.000 1/min liegt.

2. Verfahren nach Anspruch 1,
**dadurch gekennzeichnet, dass** mit der Erfüllung der ersten Bedingung ein Statusindikator (I) gesetzt wird, und bei Abfall der Drehzahl (n) unter einen Drehzahlgrenzwert (n_{G}) bei gesetztem Statusindikator der Zündzeitpunkt (ZZP) nach früh verstellt wird.

3. Verfahren nach Anspruch 2,
**dadurch gekennzeichnet, dass** ein gesetzter Statusindikator (I) gehalten wird, bis die Drehzahl (n) unter den Drehzahlgrenzwert (n_{G}) abfällt.

4. Verfahren nach Anspruch 2,
**dadurch gekennzeichnet, dass** ein gesetzter Statusindikator (I) dann gelöscht wird, wenn die Drehzahl (n) oberhalb des vorgegebenen Drehzahlbereichs (nₘᵢₙ; nₘₐₓ) ansteigt.

5. Verfahren nach Anspruch 2,
**dadurch gekennzeichnet, dass** ein gesetzter Statusindikator (I) für eine vorgegebene Zeitdauer (t) gehalten wird.

6. Verfahren nach einem der Ansprüche 1 bis 5,
**dadurch gekennzeichnet, dass** die Zeitdauer (t, ΔT) durch eine vorgegebene Anzahl von aufeinanderfolgenden Kurbelwellenumdrehungen bestimmt ist.

7. Verfahren nach Anspruch 6,
**dadurch gekennzeichnet, dass** die Zeitdauer (t, ΔT) durch fünf bis fünfzig aufeinanderfolgende Kurbelwellenumdrehungen bestimmt ist.

8. Verfahren nach Anspruch 6 oder 7,
**dadurch gekennzeichnet, dass** die Kurbelwellenumdrehungen unmittelbar aneinander anschließen.

9. Verfahren nach einem der Ansprüche 1 bis 8,
**dadurch gekennzeichnet, dass** die Kupplung (23) eine Fliehkraftkupplung ist und die Einkuppeldrehzahl innerhalb des vorgegebenen Drehzahlbereichs (nₘᵢₙ; nₘₐₓ) liegt.

## Claims

1. Method for operating a work apparatus having an internal combustion engine,
- wherein an ignition device (30) is provided for triggering an ignition spark (27) at a spark plug (20),
- and the ignition spark is provided for igniting a fuel/air mixture in a combustion chamber (6) of the internal combustion engine (5),
- wherein the combustion chamber (6) is bounded by a piston (7),
- and the ignition device (30) triggers the ignition spark (27) at the spark plug (20) at an ignition point (ZZP) depending on the rotational position of the crankshaft (9),
- and the crankshaft (9) of the internal combustion engine (1) drives a tool,
- wherein a clutch (23) is arranged between the crankshaft (9) and the tool,
- and the speed (n) of the internal combustion engine (5) is monitored via a speed monitoring circuit (26),
**characterized in**
- **that** the ignition point (ZZP) of the ignition device (30) is adjusted towards early if the following conditions are successively fulfilled:
i. the speed (n) lies within a predefined period of time (ΔT) in a speed range (nₘᵢₙ; nₘₐₓ) of 3000 rpm to 5000 rpm, wherein the predefined period of time (ΔT) is 2 to 3 seconds or is determined by a predefined number of successive crankshaft revolutions, with five to fifty crankshaft revolutions being provided,
ii. the speed (n) of the internal combustion engine (5) drops below a speed limit value (n_{G}) lying below the speed (nₘᵢₙ₎ of 3000 rpm after the first condition has been fulfilled.

2. Method according to Claim 1,
**characterized in that** a status indicator (I) is set when the first condition is fulfilled, and, in the event of a drop in the speed (n) below a speed limit value (n_{G}) when the status indicator is set, the ignition point (ZZP) is adjusted towards early.

3. Method according to Claim 2,
**characterized in that** a set status indicator (I) is kept until the speed (n) drops below the speed limit value (n_{G}).

4. Method according to Claim 2,
**characterized in that** a set status indicator (I) is deleted if the speed (n) increases above the predefined speed range (nₘᵢₙ; nₘₐₓ).

5. Method according to Claim 2,
**characterized in that** a set status indicator (I) is kept for a predefined period of time (t).

6. Method according to one of Claims 1 to 5,
**characterized in that** the period of time (t, ΔT) is determined by a predefined number of successive crankshaft revolutions.

7. Method according to Claim 6,
**characterized in that** the period of time (t, ΔT) is determined by five to fifty successive crankshaft revolutions.

8. Method according to Claim 6 or 7,
**characterized in that** the crankshaft revolutions directly follow one another.

9. Method according to one of Claims 1 to 8,
**characterized in that** the clutch (23) is a centrifugal clutch and the engagement speed lies within the predefined speed range (nₘᵢₙ; nₘₐₓ).

## Revendications

1. Procédé destiné à faire fonctionner un appareil de travail avec un moteur à combustion interne,
- un dispositif d'allumage (30) étant prévu pour déclencher une étincelle d'allumage (27) sur une bougie d'allumage (20),
- et l'étincelle d'allumage étant prévue pour allumer un mélange air-carburant dans une chambre de combustion (6) du moteur à combustion interne (5),
- la chambre de combustion (6) étant délimitée par un piston (7),
- et le dispositif d'allumage (30) déclenchant l'étincelle d'allumage (27) sur la bougie d'allumage (20) à un moment d'allumage (ZZP) en fonction de la position de rotation du vilebrequin (9),
- et le vilebrequin (9) du moteur à combustion interne (1) entraînant un outil,
- un embrayage (23) étant disposé entre le vilebrequin (9) et l'outil,
- et la vitesse de rotation (n) du moteur à combustion interne (5) étant surveillée par un circuit de surveillance (26) de vitesse de rotation,
**caractérisé en ce**
- **que** le moment d'allumage (ZZP) du dispositif d'allumage (30) est alors avancé lorsque des conditions suivantes sont remplies successivement :
i. la vitesse de rotation (n) se situe dans une période de temps (ΔT) prédéfinie dans une plage de vitesses de rotation (nₘᵢₙ ; nₘₐₓ) de 3000 tr/min à 5000 tr/min, la période de temps (ΔT) prédéfinie allant de 2 à 3 secondes ou étant définie par un nombre prédéfini de tours consécutifs de vilebrequin, cinq à cinquante tours de vilebrequin étant prévus,
ii. la vitesse de rotation (n) du moteur à combustion interne (5) descend, une fois la première condition remplie, en dessous d'une valeur de seuil de vitesse de rotation (n_{G}), qui est inférieure à la vitesse de rotation (nₘᵢₙ₎ de 3000 tr/min.

2. Procédé selon la revendication 1,
**caractérisé en ce qu'**un indicateur d'état (I) est fixé lorsque la première condition est remplie, et, en cas de baisse de la vitesse de rotation (n) sous une valeur limite de vitesse de rotation (n_{G}), le moment d'allumage (ZZP) est avancé lorsque l'indicateur d'état est fixé.

3. Procédé selon la revendication 2,
**caractérisé en ce qu'**un indicateur d'état (I) fixé est maintenu jusqu'à ce que la vitesse de rotation (n) descende en dessous de la valeur limite de vitesse de rotation (n_{G}).

4. Procédé selon la revendication 2,
**caractérisé en ce qu'**un indicateur d'état (I) fixé est alors supprimé lorsque la vitesse de rotation (n) augmente au-dessus de la plage de vitesses de rotation (nₘᵢₙ ; nₘₐₓ) prédéfinie.

5. Procédé selon la revendication 2,
**caractérisé en ce qu'**un indicateur d'état (I) fixé est maintenu pendant une période de temps (t) prédéfinie.

6. Procédé selon l'une des revendications 1 à 5,
**caractérisé en ce que** la période de temps (t, ΔT) est définie par un nombre prédéfini de tours consécutifs de vilebrequin.

7. Procédé selon la revendication 6,
**caractérisé en ce que** la période de temps (t, ΔT) est définie par cinq à cinquante tours consécutifs de vilebrequin.

8. Procédé selon la revendication 6 ou 7,
**caractérisé en ce que** les tours de vilebrequin se succèdent directement.

9. Procédé selon l'une des revendications 1 à 8,
**caractérisé en ce que** l'embrayage (23) est un embrayage centrifuge et la vitesse de rotation d'embrayage se situe à l'intérieur de la plage de vitesses de rotation (nₘᵢₙ ; nₘₐₓ) prédéfinie.
